Europäisches Patentamt

European Patent Office

Office européen des brevets

(19)

(11) Publication number: **0 101 764**
**A1**

(12) **EUROPEAN PATENT APPLICATION**

(21) Application number: **82304339.3**

(22) Date of filing: **17.08.82**

(51) Int. Cl.³: **B 60 J 11/00**

(43) Date of publication of application:
**07.03.84 Bulletin 84/10**

(84) Designated Contracting States:
**CH DE FR IT LI NL SE**

(71) Applicant: **ESSO TEXTILE COMPANY LIMITED
No. 100-2 Hsia Juai Rou Rd. 1 Shan Li
Tan Shui Taipei(TW)**

(72) Inventor: **Rau, Jun-Chang
No. 100-2 Hsia Juai Rou Rd.
1 Shan Li Tan Shui Taipei(TW)**

(74) Representative: **Arthur, Bryan Edward
Withers & Rogers 4 Dyer's Buildings Holborn
London EC1N 2JT(GB)**

(54) **Covers.**

(57) A cover suitable for covering a motor vehicle has a piece of cover material which is supported on a main longitudinal frame which is constructed from a plurality of interconnectable subsidiary frames (11, 12) including glass fibre rods (5), and end members (1, 3) including glass fibre rods (5) and which are connectable to the object e.g. by means of hooks (1) the front and rear bumpers of a car. Lateral frame members (17) connectable to the main longitudinal frame hold the roof of the cover up particularly for preventing snow, rain or the like from falling directly onto the top of, say, a motor car.

Fig.6

Covers

The present invention relates to covers, in particular for vehicles. The number of automobiles is constantly rapidly increasing. Unfortunately, many car owners have no garage available, and their cars have to be parked outdoors, for instance along the road sides, and exposed to all kinds of weather .

As a result, a car is liable to generate higher temperature inside which is unbearable to a user, especially during summer time. In addition, the outer surface of car is liable to be covered with miscellaneous dirt which has to be removed and the car must be cleaned in order to maintain an acceptable appearance.

There are some recently developed portable, known car covers such as that in U.S. patent No. 2,262,129. Some of them are set up over the car roof but not the sides, using an extension rod, for example the cover in U.S. patent No. 4,164,233. However, some problems still exist, in that the cover is complicated and time consuming to set up and to fasten in place. Also, the car cannot be covered to avoid     oblique  rays of sunshine in the morning and evening and to avoid dust blown by the wind. The cover takes up space when not in use and it must be adaptable to various kinds of

-2-

size and model of cars. Therefore, conventional covers for vehicles are impractical.

An object of this invention is to save time and manpower during setting up and dismantling a vehicle cover. A further object of this invention is to have a cover having improved ventilation.

Another object of this invention is to have a cover which can be securely fastened in position.

Yet another object of this invention is to have a cover which can be used in a very cold place and which is able to withstand the ordeal of snow or frost.

According to this invention, we propose a cover comprising cover material for covering an object, a main longitudinal frame member comprising    a plurality of interconnectable, subsidiary longitudinal members and securable to the cover material for passing over the two or more lateral frame members for connection with the main frame member and laterally  thereof, and means for fastening the cover material.

Preferably, a cover according to claim 1, wherein the subsidiary longitudinal members includes portions which are made of glass fibre.

The cover is heat-insulating, particularly snow

-3-

and frost-proof and also it guards against the sun's rays harming the interior and exterior of the object e.g. motor vehicle. The rods are connected together to form one long rod and this is attached to the cover material by means of straps. Each end of the long rod is hooked onto one of the front and rear bumpers. The lower edge of the cover is fastened underneath the car by a strap.

This cover is weather resistant and the sides and roof of the car body are fully protected. It is straightforward to both put up and take down. After being taken down the cover can be folded up into a small rectangular package by virtue of the subsidiary members being foldable, and the folded cover may be put into the car boot to save space.

An embodiment of the invention is described by way of example, with reference to the drawings in which:

Figure 1 is a front view of a dual hook of the cover according to the invention;

Figure 2 is a side view of the dual hook of Figure 1;

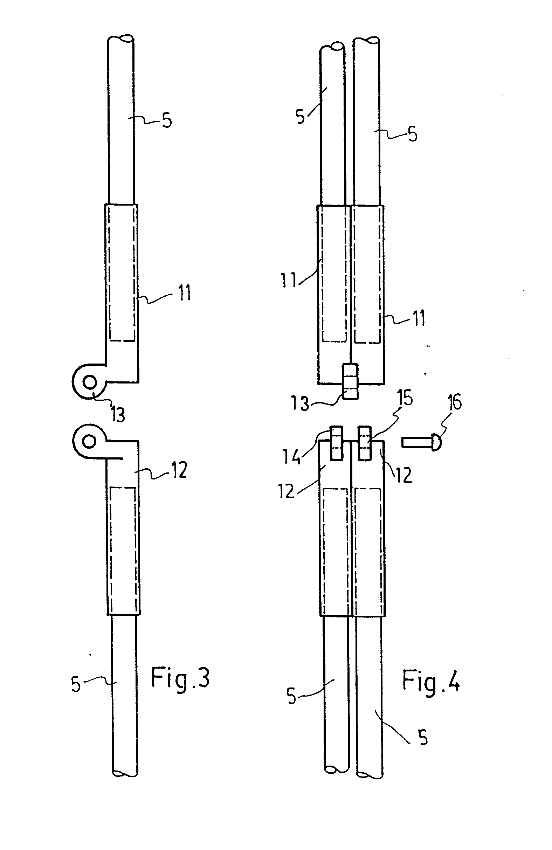

Figure 3 is a side view of a connecting tube of the cover of this ivention;

Figure 4 is a front view of a dual connecting tube of the cover of this invention;

-4-

Figure 5 is a partial view of a long rod being fitted through a suspension strap and connected to the connecting tube;

Figure 6 is a side view of the cover according to this invention put up over a car;

Figure 7 is a rear view of the cover of this invention as shown in Figure 6;

Figure 8 shows the cover of this invention folded up inside a car boot; and

Figure 9 is a front view of a lateral frame of the present invention.

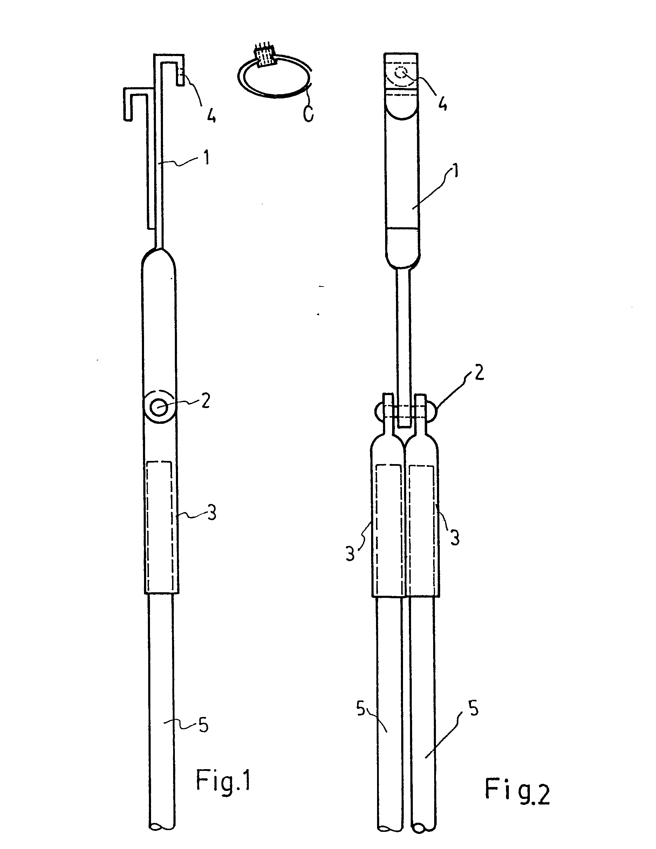

A cover according to this invention has two dual hooks (1) having two opposing, integral hook portions. Each dual hook is to be hooked round one of the front and rear bumpers. At the end of the dual hook (1), a small hook (4) is provided so as to lock the dual hook (1) to the bumper by means of a ring-shaped lock (0) to guard against it from being stolen. At the free end of the dual hook, there is a round hole, which is used for connecting the hook with a sleeved tube (3) by a rivet (2) as shown in Figure 2. A glass fibre rod (5) is put inside the sleeved tube (3) which can rotate any angle about the rivet (2). Upon the dual hook (1) being hooked on the bumper, the sleeved tube (3) is oriented obliquely

-5-

upwards.

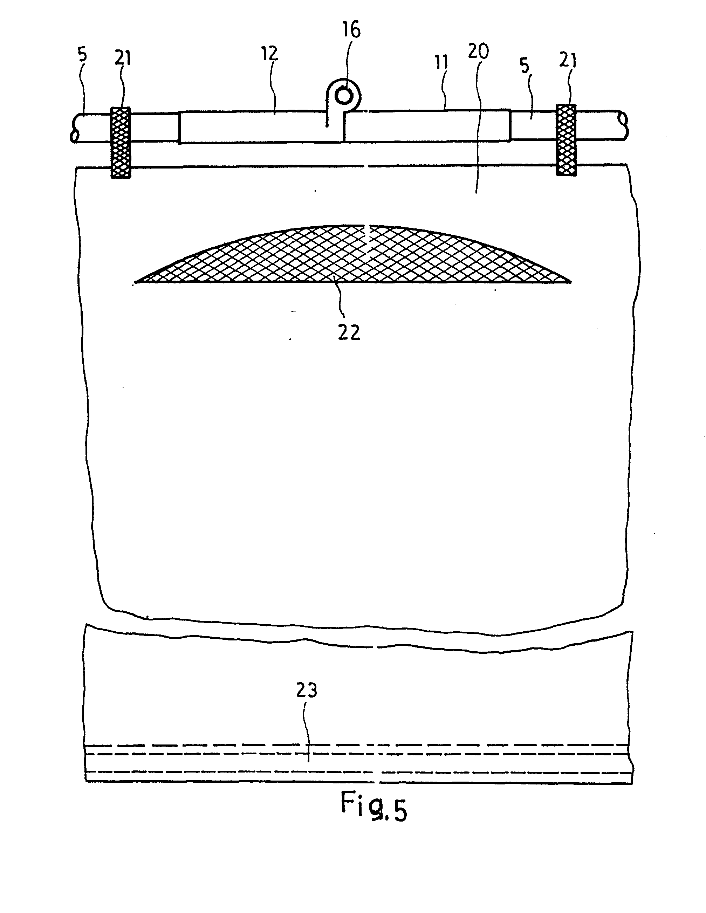

A connecting tube for use in the cover consists of two sections, an upper connecting tube (11) and a lower connecting tube (12). One end of the upper connecting tube (11) has a round lug (13); one end of the lower connecting tube (12) has two round lugs (14, 15). By passing a rivet (16) through the holes of the lugs, the upper and lower connecting tubes are connected together and can be folded up towards one another. A glass fibre rod (5) is housed inside each of the upper and the lower connecting tubes (11, 12). The cover (20), as shown in Figure 5, is furnished with a plurality of suspension straps (21), which are to be sleeved over the glass fibre rods (5) in putting up the cover (20). On both the left and right sides of the cover (20), a number of ventilation windows are provided, ans inside the bottom edge of the cover (20), a fastening strap (23) is furnished by means of which the cover (20) can be securely attached to the car body.

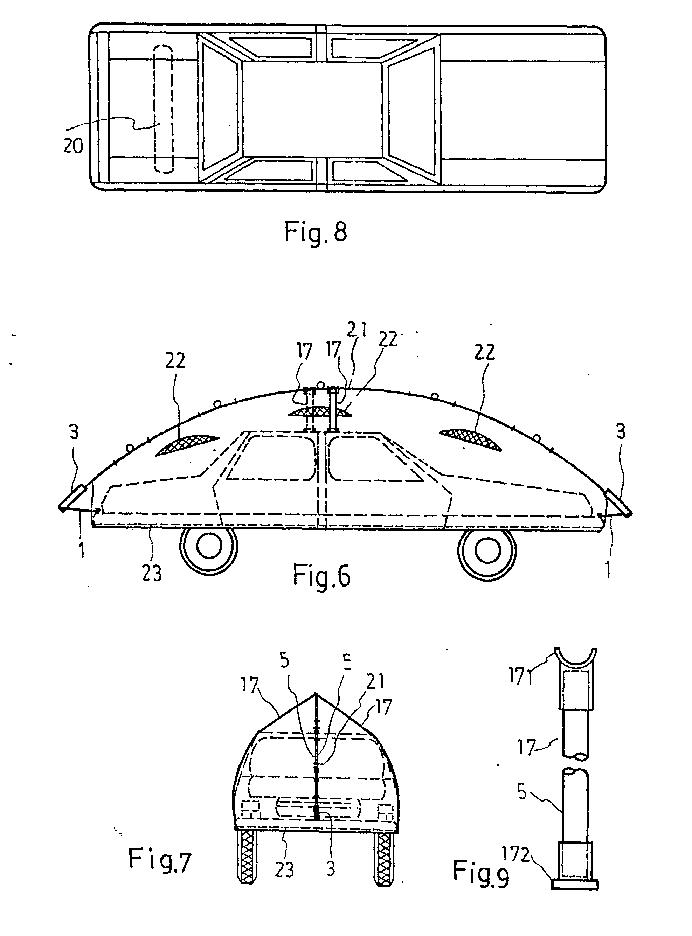

As shown in Figure 6 and 7, six glass fibre rods (5) are interconnected and put through the suspension straps (21) to form a long main rod to span the whole length of the car and hold the cover up On each side of the car roof, a lateral frame (17) (as shown in Figure 9) is furnished

-6-

The top of each lateral frame member (17) has a cup-shaped metal recess (171) for receiving one end of a glass fibre rod (5).

At the other end of the lateral  frame portion (17), a hollow end-piece (172) with a flange base is furnished so as to seat the other end of the glass fibre rod therein. The cup-shaped recesses of the two lateral frame members (17) are to be retained against the main frame.  The other ends of the lateral frame are to be retained against the car roof. The two lateral frame members (17) will support the main frame at an oblique angle so as to bear the weight of frost or snow that might arise during winter. Each end of the long rod is fitted into the sleeved tube (3) at each end of the car.

The dual hooks (1) are hooked on the front and the rear bumpers respectively and the sleeved tubes (3) slope upwards so that the cover is dome-shaped.  The bottom edge of the cover (20) is tightly attached to the car body by using the fastening strap (23).

The cover not only looks nice but also has adequate ventilation, and can guard against exposure to all types of weather.  Furthermore the cover will not become deformed under a strong wind.

As shown in Figure 8, to take down the cover remove the dual hooks (1) from the bumpers, and remove the cover (2). Fold the cover from both sides into a small rectangular package, which can be stored in the boot of the car. When re-using the cover, just take it out of the boot and un-fold it for setting up. The cover may be put up or taken down by one person in a relatively short space of time. It takes up little space and it serves to look after the car. The cover can be used for any kind of vehicle or stationary object.

CLAIMS

1.        A cover comprising cover material for covering
an object, a main longitudinal frame member comprising
a plurality of interconnectable, subsidiary longitudinal
members (11, 12) and securable to the cover material for
passing over the length of an object, two or more lateral
frame members (17) for connection with the main  frame
member and laterally thereof, and means (3, 23) for fastening
the cover material.

2.        A cover according to claim 1, wherein the
subsidiary longitudinal members include  portions which are
glass fibre rods (5).

3.        A cover according to claim 1 or 2, wherein the
means for fastening the cover comprises a hooked
end member (1) which is connectable with a subsidiary
longitudinal member (11, 12).

4.        A cover according to claim 1, 2 or 3, wherein the
subsidiary longitudinal members include lower (12) and upper
members (11) which are pivotally connected to each other and
which can each house one or more glass fibre rods (5).

5.        A cover according to any one of claims 1 to 4,
wherein the cover material can be attached to the main longitudinal frame by means of a plurality of suspension straps (21) attached to the cover material.

6.      A cover according to any one of claims 1 to 6, wherein the cover material has a strap (23) for attaching it beneath the sides of the object.

0101764

1 / 4

Fig.1

Fig.2

Fig.3

Fig.4

Fig.5

Fig. 8

Fig.6

Fig.7

Fig.9

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-B-1 116 993   (P. STERK)  * Figure 1 * | | B 60 J   11/00 |
| A | GB-A-  823 637   (M. STOEHR)  * Figures 4, 5 * | | |
| A | US-A-3 316 012   (J.F. THIER)  * Figures 1-4 * | | |
| D,A | US-A-2 262 129   (M.E. ANDREWS et al.) | | |
| D,A | US-A-4 164 233   (J.R. McANDREW) | | |
| | ----- | | |

| | | | TECHNICAL FIELDS SEARCHED (Int. Cl. ³) |
|---|---|---|---|
| | | | B 60 J   11/00 |

The present search report has been drawn up for all claims

| Place of search | Date of completion of the search | Examiner |
|---|---|---|
| BERLIN | 22-03-1983 | BECKER W D H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82